# EUROPÄISCHE PATENTSCHRIFT

(11) **EP 4 814 402 B1**
(45) Veröffentlichungstag und Bekanntmachung des Hinweises auf die Patenterteilung: **02.12.2026**
(21) Anmeldenummer: 25165596.5
(22) Anmeldetag: 24.03.2025
(51) Int. Cl.: F24H 1/10, B22C 9/24, B28B 7/34, F24H 3/00, H05B 3/00

(54) **HERSTELLUNGSVERFAHREN FÜR EINEN STRÖMUNGSHEIZER**
METHOD OF MANUFACTURING A FLOW HEATER
PROCÉDÉ DE FABRICATION D'UN DISPOSITIF DE CHAUFFAGE D'ÉCOULEMENT

(43) Veröffentlichungstag der Anmeldung: 30.09.2026
(73) Patentinhaber: Sunfire SE, 01237 Dresden (DE)
(72) Erfinder: Städel, Christian, 01189 Dresden (DE); Klahn, Christian, 03238 Finsterwalde (DE)
(74) Vertreter: Epping - Hermann - Fischer

(56) Entgegenhaltungen:
- FR-A- 591 800
- US-A1- 2022 032 501
- US-A1- 2022 178 584
- US-A1- 2023 079 681
- US-A1- 2023 213 239

## Beschreibung

Die vorliegenden Erfindung betrifft ein Herstellungsverfahren für einen Strömungsheizer und den Strömungsheizer.

Das Aufwärmen von Fluiden ist ein unabdingbarer Verfahrensschritt in zahlreichen verfahrenstechnischen Prozessen. Hierfür bieten sich in der Regel Strömungsheizer an.

Strömungsheizer sind Heizer, die von den Fluiden durchströmt werden und die Fluide dabei erwärmen.

Insbesondere kann es sich um elektrisch betriebene Strömungsheizer handeln, in denen Heizdrähte, die sich durch den eigenen elektrischen Widerstand erwärmen, die thermische Heizleistung zur Verfügung stellen.

Das Fertigen entsprechender Strömungsheizer ist bei aktuellen Methoden aufwändig und oft auch mit einem hohen Anteil an Handarbeit verbunden.

Weiterhin zeigen aktuelle Methoden Defizite in dem Bestreben in einer seriellen Fertigung gleichförmige Heizer herzustellen.

Eine Methode gemäß dem Stand der Technik wird in der Druckschrift US 2023/079681 A1 offenbart. Hier wird ein Heizdraht umgossen, um einen Strömungsheizer herzustellen. Aus der Druckschrift US 2022/178584 A1 sind weiterhin bestimmte Querschnittsformen für Strömungskanäle eines Strömungsheizers bekannt.

Es ist eine Aufgabe der vorliegenden Erfindung, Defizite im Stand der Technik zu überwinden.

Die vorliegende Erfindung betrifft insbesondere ein Herstellungsverfahren für einen Strömungsheizer und den Strömungsheizer als Vorrichtung. Der Umfang der Erfindung wird von den Ansprüchen festgelegt.

Der Strömungsheizer umfasst ein Rohr als Außenhülle und einen den Rohrquerschnitt ausfüllenden, außen zylinderförmigen Monolithen mit durchgängigen Strömungskanälen.

Das Rohr ist bevorzugt ein Standardrohr, das eine im Wesentlichen zylinderförmige Form aufweist.

Der Monolith passt bevorzugt formschlüssig in das Rohr und verengt den verfügbaren Strömungsquerschnitt für ein Fluid damit auf die Querschnitte der im Monolithen vorgesehenen Strömungskanäle.

Das Herstellungsverfahren umfasst mehrere Schritte.

In einem Schritt wird eine Gussform bereitgestellt. Die Gussform selbst umfasst bevorzugt auch das Rohr, das als eine Außenform der Gussform fungiert. Das Rohr sollte daher zumindest einer Temperatur von 1000 °C ohne Veränderungen standhalten.

Weiterhin umfasst die Gussform einen Gusskern, der einen zylindrischen Boden und mehrere auf dem Boden angeordnete Nadelstrukturen (im Folgenden "Nadeln") aufweist. Der Gusskern wird so in dem Rohr angeordnet, dass der Boden bündig, also formschlüssig, mit einem Innendurchmesser des Rohres abschließt und so den Boden der (somit nach unten geschlossenen) Gussform bildet.

Die auf dem Boden angeordneten Nadeln des Gusskerns bilden dann eine Innenform der Gussform und als solche ein Negativ zu den auszubildenden Strömungskanälen des gegossenen Monolithen.

In einem weiteren Schritt wird die Gussform mit einem gießfähigen feuerfesten Material (engl. "refractory"), das nach dem Aushärten hochtemperaturbeständig ist und im Folgenden vereinfacht "Beton" genannt wird, bis zu einer maximalen Füllhöhe ausgegossen, sodass Enden der Nadelstrukturen noch in zumindest einer Richtung (also zur Oberseite der Gussform hin, die entgegengesetzt zum Boden ausgerichtet ist) freiliegen und so der Monolith in einem noch ungebrannten Rohzustand gebildet.

In einem weiteren Schritt wird durch Brennen der gefüllten Gussform in einem Ofen bei bis zu 1000 °C der Monolith gehärtet und dabei der Gusskern geschmolzen und/oder ausgebrannt (je nach Materialbeschaffenheit des Gusskerns).

Durch das Ausbrennen/Schmelzen der Nadelstrukturen werden dann die durchgängigen Strömungskanäle im Monolithen freigelegt. Der Boden wird somit gleichzeitig entfernt und die Strömungskanäle liegen frei.

Bevorzugt umfasst der verwendete Beton zumindest Aluminiumoxid. Weiterhin enthält der verwendete Beton bevorzugt nur geringe Mengen von maximal 0,5 Massen-% an Siliziumoxiden oder ist frei von Siliziumoxiden.

Bevorzugt kann der Beton z.B. eine Tabulartonerde oder ein Hohlkugelkorund umfassen.

Ein solches Material erfüllt vorteilhaft die geforderten Gießeigenschaften.

Das Verfahren kann weiterhin die folgenden späteren Schritte umfassen.

Nach dem Ausbilden des Monolithen wie oben beschrieben werden Heizdrähte in die Strömungskanäle eingeschoben.

Mehrere Heizdrähte können dann jeweils verschweißt werden, sodass aus den Heizdrähten mehrere Widerstandsheizelemente gebildet werden. Bevorzugt ist die Zahl der gebildeten Widerstandsheizelemente durch drei teilbar, z.B. drei oder sechs, oder es wird ein einziges Widerstandsheizelement gebildet.

Vorteilhaft können dabei zusammenhängende u-förmige Heizdrähte von einer Seite des Monolithen aus in jeweils zwei Strömungskanäle eingeführt werden, sodass die Heizdrähte von immer zwei Strömungskanälen bereits stoffschlüssig verbunden sind.

Jeweils mehrere u-förmigen Heizdrähte werden dann an der anderen Seite des Monolithen zu den Widerstandsheizelementen verschweißt werden (also an der Seite der Enden der Heizdrähte). Die Anzahl an notwendigen Verschweißungen halbiert sich dann.

Die Drähte sind in Ausführungsformen insbesondere Drähte, die metallische Heizdrahtlegierungen wie FeCrAl (Eisen-Chrom-Aluminium) oder NiCr (Nickel-Chrom) umfassen oder aus diesen bestehen. Durch den elektrischen Widerstand der Drähte wird thermische Hitze erzeugt.

Diese Materialien sind besonders gut zur Bildung der Heizdrähte geeignet.

Das Verschweißen der Heizdrähte wird je nach Ausführungsform per Widerstandspunktschweißen, Laserschweißen, Verschweißen mit Doppelhülsen oder Verschweißen mittels Blechs durchgeführt. Neben Verschweißen ist in Ausführungsformen auch Verpressen zur Verbindung der Drähte möglich.

Diese Verfahren sind besonders gut zur Verbindung geeignet.

Gemäß Ausführungsformen werden die Heizdrähte bevorzugt an der Seite der Verschweißungen elektrisch kontaktiert, vorteilhaft insbesondere an unverschweißten Drahtenden.

Der Strömungsheizer ist für den Betrieb vorteilhaft so positioniert, dass im Betrieb kaltes Fluid von der Seite der Verschweißungen aus in die Strömungskanäle des Monolithen strömt. Die Elektrische Kontaktierung ist also bevorzugt in einem möglichst kühlen Temperaturbereich vorgesehen, sodass Sicherheit und Lebensdauer vorteilhaft erhöht werden können.

Gemäß Ausführungsformen weisen die Heizdrähte einen Durchmesser zwischen 1,5 und 4 mm auf, um eine möglichst effiziente Heizung der durchströmenden Fluide zu ermöglichen.

Der Gusskern umfasst bevorzugt Wachse oder besteht aus diesen. Das Material des Gusskerns zerfällt bevorzugt zumindest bei Temperaturen ab 600 °C aufwärts, bevorzugt bei Temperaturen ab 500 °C aufwärts vollständig. Bei tieferen Temperaturen ist das Material bevorzugt zähfließend, sodass es sich für die additive Fertigung eignet.

Der Gusskern wird bevorzugt per additivem Fertigungsverfahren, also 3D-Druck, gedruckt. Hierzu wird das Druckmaterial, insbesondere das Wachs, bevorzugt in Form von druckfähigen Filamenten aus dem entsprechenden Druckmaterial zur Verfügung gestellt.

In Ausführungsformen weisen die Nadeln bzw. die Strömungskanäle senkrecht zu einer Strömungsrichtung eines Fluides einen kleeblattförmigen Querschnitt aufweisen, der einem kreisförmigen Querschnitt mit drei Einstülpungen nach innen entspricht, also quasi ein Kleeblatt mit drei Blättern. So können die Drähte (immer: Drähte = Heizdrähte im vorliegenden Text) von den Einstülpungen gestützt werden, liegen aber nicht komplett an Innenwandungen der Strömungskanäle an, sodass ein freier Strömungsquerschnitt zur Durchströmung mit Fluid verbleibt.

In Ausführungsformen sind zwischen den Nadeln Querstreben, insbesondere zur mechanischen Stabilisierung, ausgeprägt. Die Querstreben müssen nicht genau senkrecht zu den Querstreben ausgerichtet sein.

In Ausführungsformen weist der Monolith entsprechend Querkanäle zwischen den Strömungskanälen auf. So kann die Durchströmung des Monolithen mit Fluiden und insbesondere deren Durchmischung verbessert werden.

In Ausführungsformen weist der zylindrische Monolith eine Zylinderhöhe zwischen 100 und 400 mm, einen Zylinderdurchmesser zwischen 100 und 500 mm und zwischen 100 und 1000 Strömungskanäle mit jeweils einem maximalen Kanalinnendurchmesser zwischen 3,5 und 8 mm auf.

Diese Abmessungen und die zuvor definierten Heizdrahtabmessungen ermöglichen eine effektive und effiziente Heizung von den Monolithen durchströmenden Fluiden.

Ein Strömungsheizer gemäß der Erfindung umfasst je nach Ausführungsform insbesondere ein oder mehrere der folgenden Elemente:
- Ein Rohr als Außenhülle,
- einen den Rohrquerschnitt ausfüllenden Monolithen, umfassend Beton,
- ein bis drei Widerstandsheizelemente oder eine andere durch drei teilbare Anzahl an Widerstandsheizelementen (6, 9 etc.), die entsprechend elektrisch einphasig (z.B. 1x230 V) oder dreiphasig (z.B. 3x230 V oder 3x400V) betrieben werden.

Der Monolith weist in Längsrichtung des Rohres bevorzugt durchgängige Strömungskanäle auf, die senkrecht zur Längsrichtung einen kleeblattförmigen Querschnitt aufweisen, der einem kreisförmigen Querschnitt mit drei Einstülpungen nach innen entspricht.

Der Monolith weist weiterhin bevorzugt Querkanäle auf, die die Strömungskanäle schräg oder senkrecht zur Längsrichtung verbinden.

Die Widerstandsheizelemente weisen weiterhin bevorzugt auch Heizdrähte auf, die durch die Strömungskanäle geführt und außerhalb der Strömungskanäle jeweils verbunden sind, wobei die Heizdrähte entlang ihres Umfangs in den Strömungskanälen an mindestens drei Punkten oder an drei Linien, die den drei Einstülpungen entsprechen, mechanisch kontaktiert und somit in ihrer Position festgelegt sind, wobei zwischen den Heizdrähten und Innenwandungen der Strömungskanäle bevorzugt ein Spalt von 1 bis 2 mm Breite vorgesehen ist, um einen ausreichenden Fluidfluss zu gewährleisten.

Im Folgenden sollen exemplarische Ausführungsbeispiele der die Erfindung anhand von Figuren näher erläutert werden. Die Erfindung ist nicht auf diese Beispiele beschränkt. Die Merkmale der Beispiele können unabhängig voneinander frei kombiniert werden.

Die Figuren zeigen:
Figur 1: zeigt ein Ausführungsbeispiel einer Gussform, umfassend ein Rohr als eine Außenform und einen Gusskern als eine Innenform.
Figur 2: zeigt einen oberen Teil des Gusskerns als Innenform in einer Detailansicht.
Figur 3: zeigt einen unteren Teil des Gusskerns als Innenform in einer Detailansicht.
Figur 4 zeigt eine Ausführungsform des gegossenen monolithischen Strömungskörpers im Rohr.
Figur 5 zeigt eine Ausführungsform des fertigen Strömungsheizers.

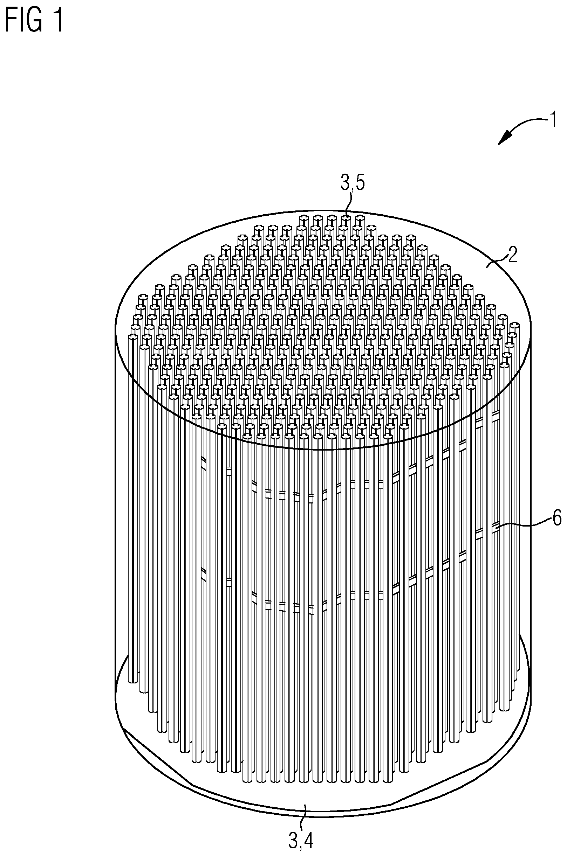

In Figur 1 ist ein Ausführungsbeispiel für eine Gussform 1 für einen Strömungsheizer dargestellt.

Die Gussform 1 umschließt eine Außenform 2 und eine Innenform 3, den Gusskern. Die Außenform 2 umfasst ein Rohr oder Rohrstück, insbesondere ist die Außenform das Rohr, das später auch die äußere Umhüllung 12, also das umgebende Rohr des Strömungsheizers bildet.

Insbesondere kann der Strömungsheizer 1 durch die äußere Umhüllung als Kartusche ausgebildet sein, die später fertig zusammengesetzt als Heizvorrichtung in eine größere Anlage, wie eine chemische Anlage, z.B. eine Elektrolyseanlage, eingesetzt und angeschlossen wird.

Das Rohr hält mindestens Temperaturen von 1000 °C stand und weist bevorzugt die folgenden Abmessungen auf: Der Rohrinnendurchmesser beträgt bevorzugt zwischen 100 und 500 mm, die Rohrlänge mindestens 100 mm bis mindestens 400 mm.

Bevorzugt handelt es sich um ein standardisiertes Rohr/Rohrstück.

Die Innenform 3 der Gussform 1 ist der Gusskern 3. Der Gusskern 3 besteht aus einem Boden 4 und darauf angeordneten Nadeln 5. Die Nadeln 5 sind in einer Längsrichtung vom Boden 4 weg, nämlich in der Längsrichtung des Rohres 2, langgestreckte prismenförmige Körper, deren Querschnitt über die Länge bevorzugt konstant bleibt (also kein spitzes Zulaufen etc.).

Der Boden 4 ist bevorzugt eine im Wesentlichen zylindrische flache Platte, die bevorzugt als Außendurchmesser das Maß des Innendurchmessers des Rohres 3 aufweist, also passend gefertigt ist (zumindest im Rahmen einer Toleranz für die Passung).

Der Boden 4 schließt das Rohr 2 somit nach unten ab, so dass eine nach unten geschlossene Gussform 1 entsteht. Unten ist dabei definitionsgemäß die Seite der Gussform, an der der Boden 4 ausgebildet ist.

Die Nadeln 5 sind bevorzugt stoffschlüssig mit dem Boden 4 verbunden. Als Teil des Gusskerns 3 bilden die Nadeln 5 das Negativ zu auszubildenden Strömungskanälen eines Monolithen, der als Strömungskörper fungiert. Die Nadeln 5 erstrecken sich daher über den Teil der Länge des Rohres 2, über den der Monolith ausgebildet werden soll.

Ein in der Gussform 1 gegossener Monolith darf anders gesagt maximal die Länge der Nadeln 5 haben.

Die Nadeln 5 haben bevorzugt im Querschnitt (senkrecht zur Längsrichtung) eine Form ähnlich einem dreiblättrigen Kleeblatt. D.h., die Nadeln 5 weisen in ihrer Querschnittsform bevorzugt drei Einstülpungen auf, die sich bevorzugt über die Gesamtlänge der Nadeln kontinuierlich erstrecken. Diese Einstülpungen bilden in den fertigen Strömungskanälen dann Auflagelinien oder Punkte (falls die Ausstülpungen nicht als kontinuierliche Linien ausgeführt sind) für die eingeführten Heizdrähte.

Der gesamte Gusskern 3 ist bevorzugt als ein monolithisches Bauteil additiv gefertigt, also 3-D-gedruckt. Der Gusskern 3 besteht aus einem dafür geeigneten Material. Insbesondere werden zum 3-D Druck bevorzugt Wachsfilamente oder andere geeignete druckfähige Materialien verwendet. Diese Materialien müssen zumindest bei erhöhten Temperaturen über Raumtemperatur (deutlich unter 600 °C) zähflüssig sein um diese drucken zu können.

Ein weiteres bevorzugtes Merkmal ist, dass das Material, mit dem gedruckt wird, bevorzugt das Wachs, zumindest bei 600 °C oder bei Temperaturen über 600 °C, bevorzugt auch schon bei tieferen Temperaturen über 500 °C, thermisch zersetzbar ist, d.h. z.B. vollständig schmilzt bzw. verbrennt. Dies ist erforderlich, um den Gusskern 3 nach dem Gussvorgang durch einen Brennvorgang entfernen/zersetzen zu können.

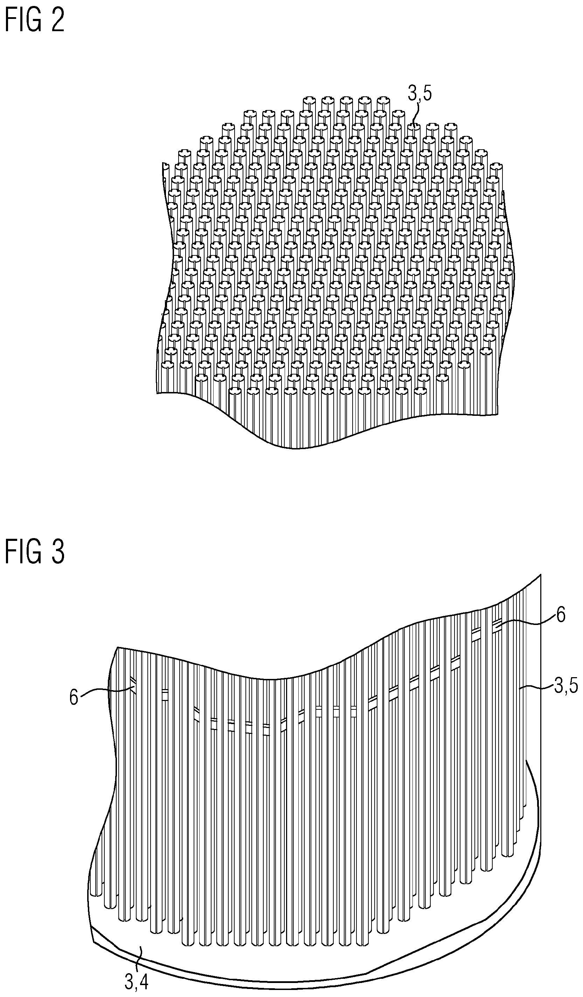

Die genaue Form der Nadeln 5, des Bodens 4 und der Querstreben 6 ist insbesondere in den Detailansicht in den Figuren 2 und 3 dargestellt.

Während des Druckens werden zwischen den einzelnen Nadeln bevorzugt auch Querstreben 6 gedruckt, die für eine Stabilisierung der einzelnen Nadeln 5 und des gesamten Gusskerns 2 sorgen.

Die Querstreben 6 müssen nicht, können aber genau senkrecht zu den Nadeln 5 ausgerichtet sein.

Die Querstreben 6 können regelmäßig oder unregelmäßig, zufällig angeordnet sein. Die Querstreben 6 können verschieden ausgerichtet sein. Die Querstreben 6 verbinden bevorzugt alle Nadeln 5 quer zu deren Längsrichtung. Die Querstreben 6 sorgen insbesondere auch für eine ausreichende Stabilisierung des Gusskerns 3 während des Gussvorganges.

Die einzelnen Nadeln 5 weisen bevorzugt immer dieselbe Form mit einen Durchmesser von 3,5 bis 8 mm auf. Dies entspricht dem gewünschten Durchmesser der späteren Strömungskanäle. Die Nadeln 5 weisen weiterhin bevorzugt eine Länge 100 bis 400 mm auf. Dies entspricht der gewünschten Länge der späteren Strömungskanäle.

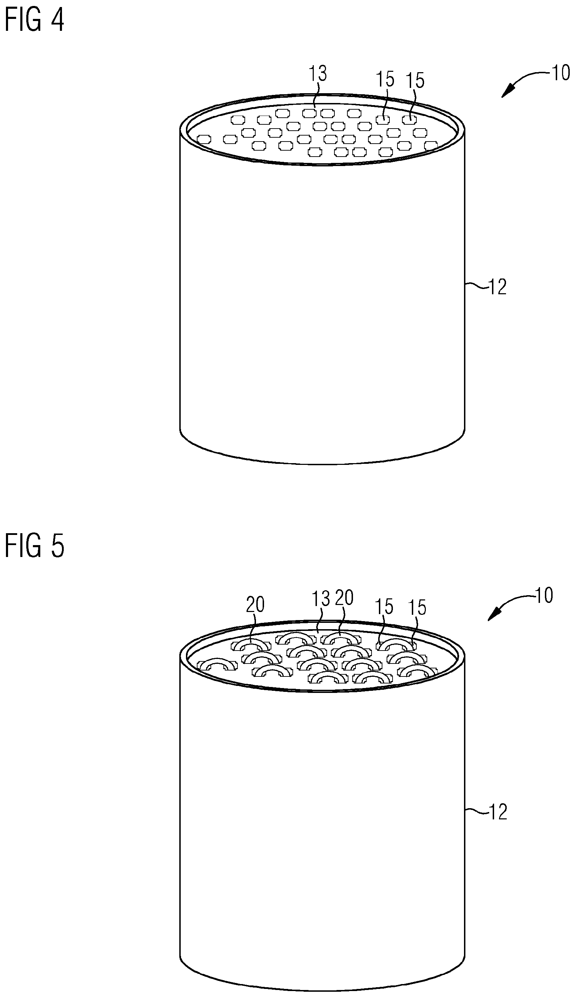

Anschließend wird der Monolith 13 wie in Figur 4 dargestellt durch Gießen gefertigt.

Hierzu wird bevorzugt eine betonähnliche Masse, im Folgenden vereinfacht Beton genannt, zum Beispiel Tabulartonerde oder Hohlkugelkorund bis zu einer maximalen Füllhöhe in die Gussform 1 eingefüllt, sodass die obersten Spitzen/Enden der Nadeln 5 gerade nicht mehr bedeckt sind. Somit werden durchgängige Strömungskanäle 15, die um die Nadeln 5 gebildet werden, erzeugt. Die Innenform der Strömungskanäle 15 entspricht der Außenform der Nadeln 5.

Anschließend wird die gesamte Vorrichtung, umfassend die Gussform und den gegossenen (Roh-)Beton, in einem Ofen bei einer Temperatur von bevorzugt zwischen 600 und 1200 °C bevorzugte mindestens 1000 °C gebrannt.

Durch diesen Schritt des Brennens werden vorteilhaft zwei Prozessierungsschritte in einem Verfahrensschritt erzielt.

Einerseits zersetzt sich das temperaturempfindliche Wachsmaterial des Gusskerns 3 und der Gusskern 3 wird so entfernt und die Strömungskanäle 15 freigelegt. Andererseits härtet so der wärmehärtbare Beton, der bevorzugt einen hohen Aluminiumoxidgehalt aufweist, um die für den Betrieb nötige Beständigkeit zu erhalten.

Der Beton bildet ausgehärtet den Monolithen 13 aus, der die Strömungskanäle 15 aufweist und so einen Strömungskörper 13 des Strömungsheizers 10 bildet.

Den Strömungskörper 13 umschließt weiterhin das Rohr 12 (= Rohr 2 der Gussform).

Der Strömungskörper 13 füllt das Rohr 12 nach außen hin komplett aus und bildet durch seine Strömungskanäle 15 einen verfügbaren Strömungsquerschnitt für ein durchströmendes Fluid.

Der Monolith 13 hat bevorzugt eine Länge von 100 bis 400 mm und enthält ca. 100 bis zu 1000 Strömungskanäle 15, was der Anzahl der benötigten Nadeln 5 des Gusskerns 3 entspricht. Der maximale Kanaldurchmesser der bevorzugt gleichförmigen Strömungskanäle beträgt bevorzugt jeweils 3,5 bis 8 mm.

Zwischen den Strömungskanälen 15 sind bevorzugt den Querstreben 6 des Gusskerns entsprechende Querkanäle ausgeprägt, die die Strömungsdynamik bevorzugt vorteilhaft beeinflussen.

Die Strömungskanäle 15 weisen bevorzugt eine dreiblättrige Kleeblatt-förmige Querschnittsform auf (mit drei Einstülpungen, wie oben beschrieben).

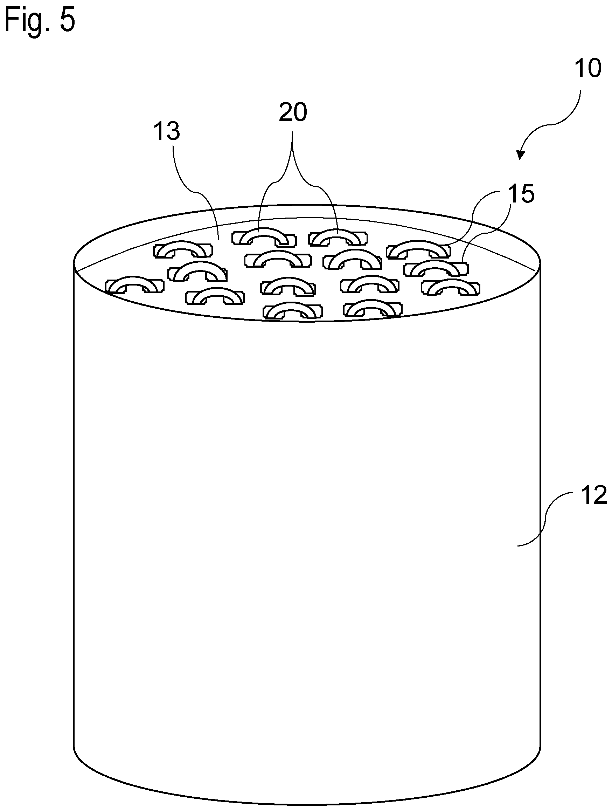

Anschließend können, wie in Figur 5 dargestellt, Heizdrähte 20 in die Strömungskanäle 15 eingeführt werden, um Widerstandsheizelemente auszubilden.

Ein Widerstandsheizelement ist ein aus den elektrischen Heizdrähten 20 gefertigtes Heizelement, das bei Anlegen einer elektrischen Spannung durch den eigenen intrinsischen elektrischen Widerstand erwärmt wird.

Bevorzugt werden in alle Strömungskanäle 15 Heizdrähte 20 eingeführt, sodass ein Fluid, dass durch die Strömungskanäle 15 strömt, durch den an den Heizdrähten angelegten Strom erwärmt wird.

Die Heizdrähte 20 sollen jedoch nicht alle einzeln elektrisch kontaktiert werden, sondern sollen zu einem oder mehreren größeren Heizelementen zusammengefügt werden. Hierzu sind verschiedene Methoden denkbar.

Die Heizdrähte sollen insbesondere stoffschlüssig verbunden werden, zum Beispiel durch Verpressen oder Verschweißen. Mögliche Schweißverfahren sind oben genannt.

Bevorzugt werden u- förmige Drähte in immer jeweils zwei Strömungskanäle 15, z.B. nebeneinanderliegende Strömungskanäle 15, eingeführt, sodass die Heizdrähte 20 nur noch von einer Seite, an denen nicht die u-förmige Verbindung vorliegt, z.B. per Schweißen verbunden werden müssen.

Zum Beispiel kann ein einziges Heizelement oder es können drei separate Heizelemente ausgebildet werden. Der Strömungsheizer kann entsprechend einphasig oder dreiphasig betrieben werden (standardmäßig mit Wechselstrom bei 230 V).

Die Heizdrähte bestehen bevorzugt aus Legierungen, die Metalle wie Eisen, Chrom, Aluminium und/oder Nickel enthalten (z.B. FeCrAl oder NiCr).

Der Strömungsheizer kann z.B. zum Erwärmen von durchströmenden Fluiden durch Anlegen einer elektrischen Spannung verwendet werden. Insbesondere bietet sich das Erwärmen von Fluiden, die in einen Reaktor, einen Elektrolyseur oder eine ähnliche Vorrichtung geführt werden, an.

Der beschriebene Strömungsheizer 10 ist vorteilhaft einfach fertigbar und mit Heizdraht bestückbar.

Mit dem Strömungsheizer ist eine Heizleistung von mindestens 50 kW erzielbar.

### Bezugszeichenliste

- 1: Gussform
- 2: Außenform, Rohr
- 3: Innenform, Gusskern
- 4: Boden
- 5: Nadeln
- 6: Querstreben

- 10: Strömungsheizer
- 12: Außenwand, Rohr
- 13: Strömungskörper, Monolith
- 15: Strömungskanäle

- 20: Heizdrähte

## Patentansprüche

1. Herstellungsverfahren für einen Strömungsheizer (10), umfassend ein Rohr (2,12) als Außenhülle und einen den Rohrquerschnitt ausfüllenden, außen zylinderförmigen Monolithen (13) mit durchgängigen Strömungskanälen (15), wobei das Herstellungsverfahren die folgenden Schritte umfasst:
- Bereitstellen einer Gussform (1) umfassend Bereitstellen des Rohres (2,12) als Außenform der Gussform (1), das zumindest einer Temperatur von 1000 °C standhält, und Bereitstellen eines Gusskerns (3) der Gussform (1), wobei der Gusskern (3) einen zylindrischen Boden (4) und mehrere auf dem Boden (4) angeordnete Nadelstrukturen (5) aufweist,
- Anordnen des Gusskerns (3) in dem Rohr (2,12), wobei der Gusskern (3) zumindest den Boden (4) der Gussform (1) bildet und bündig mit dem Rohr (2,12) schließt,
- Ausgießen der Gussform (1) mit Beton bis zu einer maximalen Füllhöhe, sodass Enden der Nadelstrukturen (5) noch in zumindest einer Richtung freiliegen, zur Bildung des Monolithen (13),
- Brennen der gefüllten Gussform (1) in einem Ofen bei bis zu 1000 °C und dabei Härten des Monolithen (13) sowie Schmelzen und/oder Ausbrennen des Gusskerns (3) im Ofen, sodass durch Ausbrennen der Nadelstrukturen (5) und/oder Schmelzen der Nadelstrukturen (5) die durchgängigen Strömungskanäle (15) im Monolithen (13) freigelegt werden,
- Einführen von Heizdrähten (20) in die Strömungskanäle.

2. Herstellungsverfahren nach Anspruch 1, wobei der Beton zumindest Aluminiumoxid umfasst und frei von Siliziumoxid ist.

3. Herstellungsverfahren nach einem der Ansprüche 1 oder 2, das folgende weitere Schritte umfasst:
- Verschweißen von jeweils mehreren Heizdrähten (20) zur Bildung von Widerstandsheizelementen.

4. Herstellungsverfahren nach Anspruch 3, wobei zusammenhängende u-förmige Heizdrähte (20), von einer Seite des Monolithen (13) aus, in jeweils zwei Strömungskanäle (15) eingeführt werden,
wobei jeweils mehrere u-förmigen Heizdrähte (20) an der anderen Seite des Monolithen (13) zu den Widerstandsheizelementen verschweißt werden.

5. Herstellungsverfahren nach einem der Ansprüche 3 oder 4, wobei die Heizdrähte (20) metallische Heizdrahtlegierungen wie FeCrAl oder NiCr umfassen oder aus diesen bestehen.

6. Herstellungsverfahren nach einem der Ansprüche 3 bis 5, wobei das Verschweißen der Heizdrähte (20) per Widerstandspunktschweißen, Laserschweißen, Verschweißen mit Doppelhülsen oder Verschweißen mittels Blechs durchgeführt wird.

7. Herstellungsverfahren nach einem der Ansprüche 3 bis 6, wobei die Heizdrähte (20) an der Seite der Verschweißungen elektrisch kontaktiert werden.

8. Herstellungsverfahren nach einem der Ansprüche 3 bis 7, wobei die Heizdrähte (20) einen Durchmesser zwischen 1,5 und 4 mm aufweisen.

9. Herstellungsverfahren nach einem der Ansprüche 1 bis 8, wobei der Gusskern (3) Wachse umfasst oder aus diesen besteht, wobei die Wachse bei einer Temperatur von oder über 600 °C zerfallen.

10. Herstellungsverfahren nach einem der Ansprüche 1 bis 9, wobei der Gusskern (3) per additivem Fertigungsverfahren gedruckt wird.

11. Herstellungsverfahren nach einem der Ansprüche 1 bis 10, wobei die Nadelstrukturen (5) bzw. die Strömungskanäle (15) senkrecht zu einer Strömungsrichtung eines Fluides einen kleeblattförmigen Querschnitt aufweisen, der einem kreisförmigen Querschnitt mit drei Einstülpungen nach innen entspricht.

12. Herstellungsverfahren nach einem der Ansprüche 1 bis 11, wobei zwischen den Nadelstrukturen (5) Querstreben (6) ausgeprägt sind.

13. Herstellungsverfahren nach einem der Ansprüche 1 bis 12, wobei der Monolith Querkanäle zwischen den Strömungskanälen (15) aufweist.

14. Herstellungsverfahren nach einem der Ansprüche 1 bis 13, wobei der Monolith eine Zylinderhöhe zwischen 100 und 400 mm, einen Zylinderdurchmesser zwischen 100 und 500 mm und zwischen 100 und 1000 Strömungskanäle (15) mit jeweils einem maximalen Kanalinnendurchmesser zwischen 3,5 und 8 mm aufweist.

15. Strömungsheizer (10) umfassend ein Rohr (2,12) als Außenhülle, einen den Rohrquerschnitt ausfüllenden Monolithen (13), umfassend Beton, und Widerstandsheizelemente,
wobei der Monolith in Längsrichtung des Rohres (2,12) durchgängige Strömungskanäle (15) aufweist, die senkrecht zur Längsrichtung einen kleeblattförmigen Querschnitt aufweisen, der einem kreisförmigen Querschnitt mit drei Einstülpungen nach innen entspricht,
wobei der Monolith weiterhin Querkanäle (15) aufweist, die die Strömungskanäle (15) senkrecht zur Längsrichtung verbinden,
wobei die Widerstandsheizelemente weiterhin Heizdrähte (20) umfassen, die durch die Strömungskanäle (15) geführt und außerhalb der Strömungskanäle (15) jeweils verbunden sind, wobei die Heizdrähte (20) entlang ihres Umfangs in den Strömungskanälen (15) an drei Punkten oder Linien, die den drei Einstülpungen entsprechen, mechanisch kontaktiert und somit in ihrer Position festgelegt sind, wobei zwischen den Heizdrähten (20) und Innenwandungen der Strömungskanäle (15) ein Spalt von 1 bis 2 mm Breite vorgesehen ist.

## Claims

1. Manufacturing method of a flow heater (10) comprising a tube (2, 12) as an outer shell and a monolith (13) that is cylindrical on the outside and fills the cross-section of the tube, with continuous flow channels (15), wherein the manufacturing method comprises the following steps:
- providing a casting mold (1), comprising providing the tube (2, 12) as the outer mold of the casting mold (1), which withstands a temperature of at least 1000 °C, and providing a casting core (3) for the casting mold (1), wherein the casting core (3) has a cylindrical base (4) and a plurality of needle structures (5) arranged on the base (4),
- positioning the casting core (3) inside the tube (2, 12), wherein the casting core (3) forms at least the base (4) of the casting mold (1) and is flush with the tube (2, 12),
- Filling the casting mold (1) with concrete up to a maximum fill level so that the ends of the needle structures (5) remain exposed in at least one direction, to form the monolith (13),
- Firing the filled casting mold (1) in a furnace at up to 1000°C, thereby hardening the monolith (13) and melting and/or burning out the casting core (3) in the furnace, such that the continuous flow channels (15) in the monolith (13) are exposed by the burnout of the needle structures (5) and/or the melting of the needle structures (5),
- Inserting heating wires (20) into the flow channels.

2. Manufacturing method according to claim 1, wherein the concrete comprises at least alumina and is free of silica.

3. Manufacturing method according to any one of claims 1 or 2, comprising the following additional steps:
- Welding together several groups of heating wires (20) to form resistive heating elements.

4. Manufacturing method according to claim 3, wherein continuous U-shaped heating wires (20) are inserted, from one end of the monolith (13), into two flow channels (15) each, wherein a plurality of U-shaped heating wires (20) are welded together on the other end of the monolith (13) to form the resistive heating elements.

5. Manufacturing method according to any one of claims 3 or 4, wherein the heating wires (20) comprise or consist of metallic heating wire alloys such as FeCrAl or NiCr.

6. Manufacturing method according to any one of claims 3 to 5, wherein the heating wires (20) are welded by resistance spot welding, laser welding, double-sleeve welding, or sheet metal welding.

7. Manufacturing method according to any one of claims 3 to 6, wherein the heating wires (20) are electrically connected at the end with the welding.

8. Manufacturing method according to any one of claims 3 to 7, wherein the heating wires (20) have a diameter between 1.5 and 4 mm.

9. Manufacturing method according to any one of claims 1 to 8, wherein the casting core (3) comprises waxes or consists of them, wherein the waxes decompose at a temperature of 600°C or higher.

10. Manufacturing method according to any one of claims 1 to 9, wherein the casting core (3) is printed using an additive manufacturing process.

11. Manufacturing method according to any one of claims 1 to 10, wherein the needle structures (5) or the flow channels (15) have a cloverleaf-shaped cross-section perpendicular to a flow direction of a fluid, which corresponds to a circular cross-section with three inward indentations.

12. Manufacturing method according to any one of claims 1 to 11, wherein transverse struts (6) are formed between the needle structures (5).

13. Manufacturing method according to any one of claims 1 to 12, wherein the monolith comprises transverse channels between the flow channels (15).

14. Manufacturing method according to any one of claims 1 to 13, wherein the monolith has a cylinder height between 100 and 400 mm, a cylinder diameter between 100 and 500 mm, and between 100 and 1,000 flow channels (15), each with a maximum internal channel diameter between 3.5 and 8 mm.

15. Flow heater (10) comprising a tube (2, 12) as an outer casing, a monolith (13) made of concrete that fills the cross-section of the tube, and resistive heating elements, wherein the monolith has flow channels (15) extending continuously in the longitudinal direction of the tube (2, 12), which have a cloverleaf-shaped cross-section perpendicular to the longitudinal direction, corresponding to a circular cross-section with three inward indentations, wherein the monolith further comprises transverse channels (15) that connect the flow channels (15) perpendicular to the longitudinal direction,
wherein the resistive heating elements further comprise heating wires (20) that are routed through the flow channels (15) and connected to one another outside the flow channels (15), wherein the heating wires (20) are mechanically contacted along their circumference within the flow channels (15) at three points or lines corresponding to the three indentations and are thus fixed in position, wherein a gap 1 to 2 mm wide is provided between the heating wires (20) and the inner walls of the flow channels (15).

## Revendications

1. Procédé de fabrication d'un réchauffeur à écoulement (10), comprenant un tube (2, 12) servant d'enveloppe extérieure et un monolithe (13) de forme cylindrique à l'extérieur, remplissant la section transversale du tube et comportant des canaux d'écoulement (15) continus, le procédé de fabrication comprenant les étapes suivantes :
- fournir un moule de coulée (1), comprenant la fourniture du tube (2, 12) servant de moule extérieur du moule de coulée (1), qui résiste à une température d'au moins 1 000 °C, et la fourniture d'un noyau de coulée (3) du moule de coulée (1), le noyau de coulée (3) présentant un fond cylindrique (4) et plusieurs structures en forme d'aiguilles (5) disposées sur le fond (4),
- disposer le noyau de coulée (3) dans le tube (2, 12), le noyau de coulée (3) formant au moins le fond (4) du moule de coulée (1) et affleurant avec le tube (2, 12),
- le remplissage du moule de coulée (1) avec du béton jusqu'à une hauteur maximale de remplissage, de sorte que les extrémités des structures en forme d'aiguilles (5) restent exposées dans au moins une direction, afin de former le monolithe (13),
- cuisson du moule de coulée (1) dans un four à une température pouvant atteindre 1000 °C, ce qui entraîne le durcissement du monolithe (13) ainsi que la fusion et/ou la combustion du noyau de coulée (3) dans le four, de sorte que la combustion des structures en forme d'aiguilles (5) et/ou la fusion des structures en forme d'aiguilles (5) permettent de mettre à nu les canaux d'écoulement continus (15) dans le monolithe (13),
- introduction de fils chauffants (20) dans les canaux d'écoulement.

2. Procédé de fabrication selon la revendication 1, dans lequel le béton comprend au moins de l'oxyde d'aluminium et est exempt d'oxyde de silicium.

3. Procédé de fabrication selon l'une des revendications 1 ou 2, comprenant les étapes supplémentaires suivantes :
- le soudage de plusieurs fils chauffants (20) entre eux pour former des éléments chauffants à résistance.

4. Procédé de fabrication selon la revendication 3, dans lequel des fils chauffants (20) en forme de U, reliés entre eux, sont introduits, à partir d'un côté du monolithe (13),
dans deux canaux d'écoulement (15) respectifs,
dans lequel plusieurs fils chauffants (20) en forme de U étant soudés, de chaque côté, à l'autre côté du monolithe (13) pour former les éléments chauffants à résistance.

5. Procédé de fabrication selon l'une des revendications 3 ou 4, dans lequel les fils chauffants (20) comprennent ou sont constitués d'alliages métalliques pour fils chauffants, tels que FeCrAl ou NiCr.

6. Procédé de fabrication selon l'une des revendications 3 à 5, dans lequel le soudage des fils chauffants (20) est réalisé par soudage par points à résistance, soudage au laser, soudage à double manchon ou soudage à l'aide d'une tôle.

7. Procédé de fabrication selon l'une des revendications 3 à 6, dans lequel les fils chauffants (20) sont mis en contact électrique du côté des soudures.

8. Procédé de fabrication selon l'une des revendications 3 à 7, dans lequel les fils chauffants (20) présentent un diamètre compris entre 1,5 et 4 mm.

9. Procédé de fabrication selon l'une des revendications 1 à 8, dans lequel le noyau de coulée (3) comprend des cires ou est constitué de celles-ci , les cires se décomposant à une température égale ou supérieure à 600 °C .

10. Procédé de fabrication selon l'une des revendications 1 à 9, dans lequel le noyau de coulée (3) est imprimé par un procédé de fabrication additive.

11. Procédé de fabrication selon l'une des revendications 1 à 10, dans lequel les structures en forme d'aiguilles (5) ou les canaux d'écoulement (15) présentent, perpendiculairement à une direction d'écoulement d'un fluide, une section transversale en forme de trèfle, qui correspond à une section transversale circulaire comportant trois renfoncements vers l'intérieur.

12. Procédé de fabrication selon l'une des revendications 1 à 11, dans lequel des entretoises transversales (6) sont formées entre les structures en forme d'aiguilles (5).

13. Procédé de fabrication selon l'une des revendications 1 à 12, dans lequel le monolithe comporte des canaux transversaux entre les canaux d'écoulement (15).

14. Procédé de fabrication selon l'une des revendications 1 à 13, dans lequel le monolithe présente une hauteur de cylind e comprise entre 100 et 400 mm, un diamètre de cylindre compris entre 100 et 500 mm et entre 100 et 1 000 canaux d'écoulement (15) présentant chacun un diamètre intérieur maximal compris entre 3,5 et 8 mm.

15. Réchauffeur à courant (10) comprenant un tube (2, 12) servant d'enveloppe extérieure, un monolithe (13) remplissant la section transversale du tube, constitué de béton, et des éléments chauffants à résistance,
le monolithe présentant, dans le sens longitudinal du tube (2, 12), des canaux d'écoulement (15) continus qui, perpendiculairement au sens longitudinal, présentent une section transversale en forme de trèfle, correspondant à une section circulaire comportant trois replis vers l'intérieur, le monolithe comportant en outre des canaux transversaux (15) qui relient les canaux d'écoulement (15) perpendiculairement à la direction longitudinale,
les éléments chauffants à résistance comprenant en outre des fils chauffants (20) qui traversent les canaux d'écoulement (15) et sont reliés à l'extérieur de ceux-ci, les fils chauffants (20) étant en contact mécanique le long de leur périphérie dans les canaux d'écoulement (15) en trois points ou lignes correspondant aux trois invaginations, et sont ainsi fixés en position, un interstice d'une largeur de 1 à 2 mm étant prévu entre les fils chauffants (20) et les parois intérieures des canaux d'écoulement (15) .
